# EUROPÄISCHE PATENTSCHRIFT

(11) **EP 2 280 812 B1**
(45) Veröffentlichungstag und Bekanntmachung des Hinweises auf die Patenterteilung: **07.06.2017**
(21) Anmeldenummer: 09734091.3
(22) Anmeldetag: 04.03.2009
(51) Int. Cl.: B29C 47/02, B60S 1/38, B29C 35/02

(54) **VERFAHREN ZUR HERSTELLUNG VON STRANGEXTRUDATEN FÜR WISCHBLÄTTER**
METHOD OF PRODUCING EXTRUDATES FOR WIPER-BLADES
PROCEDE DE FABRICATION EXTRUDATS POUR LES ESSUIE-GLACES

(30) Priorität: 23.04.2008 DE 102008001347
(43) Veröffentlichungstag der Anmeldung: 09.02.2011
(73) Patentinhaber: Robert Bosch GmbH, 70442 Stuttgart (DE)
(72) Erfinder: Lay, Reiner, 52072 Aachen (DE)
(86) Internationale Anmeldenummer: PCT/EP2009/052552
(87) Internationale Veröffentlichungsnummer: WO 2009/130081

(56) Entgegenhaltungen:
- EP-A1- 0 240 897
- EP-A1- 1 607 293
- EP-A2- 1 132 242
- WO-A1-2007/011996
- WO-A2-2007/092209
- DE-A1- 10 129 773
- FR-A1- 2 728 217
- GB-A- 2 346 318
- JP-A- 60 063 131
- JP-A- 2004 231 056
- US-A- 5 459 900

## Beschreibung

### Stand der Technik

Die Erfindung betrifft ein Verfahren zur Herstellung von Strangextrudaten gemäß dem Anspruch 1. Strangprofile aus einem Elastomermaterial werden z.B. für Wischgummis eingesetzt. Derartige Wischgummis finden Verwendung z.B. in Scheibenwischern von Kraftfahrzeugen oder z.B. auch in Abstreifgummis, wie sie beispielsweise zur Scheibenreinigung eingesetzt werden.

Strangprofile, die für Wischgummis eingesetzt werden, umfassen im Allgemeinen einen Basisabschnitt und einen Lippenabschnitt. Die Materialanforderungen an den Basisabschnitt und den Lippenabschnitt sind dabei im Allgemeinen unterschiedlich. Wenn das Strangprofil für Scheibenwischer in Kraftfahrzeugen eingesetzt wird, so sind der Basisabschnitt und der Lippenabschnitt im Allgemeinen über einen Kippsteg miteinander verbunden. Der Lippenabschnitt ist dabei üblicherweise an einem dreieckförmigen Schwenkteil, der über einen Kippsteg mit dem Basisteil verbunden ist, ausgebildet. Um ein hinreichend gutes Wischverhalten des Wischgummis zu erzielen, wird der Lippenabschnitt üblicherweise aus einem Material mit einer geringen Reibung auf Glas und einer hohen Verschleißfestigkeit ausgebildet. Demgegenüber soll der Kippsteg z.B. eine hohe Flexibilität und Witterungsbeständigkeit aufweisen. Um die unterschiedlichen Eigenschaften zu erzielen, ist es z.B. aus DE-A 35 27 093 bekannt, ein Wischgummi zu fertigen, das aus einem Material gebildet ist, das überwiegend aus EPDM besteht und mit einem Peroxid vulkanisiert ist und einen Lippenteil aufweist, dessen auf der Oberfläche gleitende Kontaktteile aus chloriertem Dien-Typ-Gummi gebildet sind. Die Herstellung erfolgt z.B. durch ein Coextrusionsverfahren, wobei im Anschluss an die Coextrusion der Gummi im Bereich des Lippenteils chloriert wird.

Weiterhin ist es üblich, den Basisabschnitt mit einem Trägerprofil zu verbinden. Das Trägerprofil wird üblicherweise ebenfalls aus einem Elastomermaterial gefertigt. Das Wischgummi samt Trägerprofil wird üblicherweise durch ein Coextrusionsverfahren hergestellt. Je nach Anforderungen an das Wischgummi kann das Trägerprofil einen Spoiler aufweisen.

Nach dem Verlassen des Extruders ist die Elastomermasse, aus der das Wischgummi und das Trägerprofil gebildet sind, noch nicht vernetzt und damit weich und plastisch. Auf Grund der Schwerkraft und durch Aufschwimmen des Profils in einem zur Vulkanisation eingesetzten Salzbad können bleibende Deformationen des Profils entstehen. Dies führt zu erheblichen Funktionseinbußen des Wischgummis.

Weiterhin ist aus der JP 2004-231056 ein Wischblatt bekannt, dass ein elastomeres und ein thermoplastisches Material aufweist. Darüber hinaus ist aus der DE 101 29 773 A1 ein Halter für die Wischlippe eines Scheibenwischers bekannt, wobei der Halter aus einem extrudierten elastischen Material besteht. Aus der US 5,459,900 ist ein weiteres Wischblatt bekannt, dessen Wischstreifen zwei profilierte Anteile umfasst, welche miteinander verbunden sind. Auch aus der JP 60063131 A1 ist ein Wischgummprofil bekannt, das als Doppelprofil erzeugt und nachfolgend zugeschnitten wird. Darüber hinaus ist aus der WO 2007/011996 A1 ein Wischgummiprofil bekannt, dass einen am Halteabschnitt des Wischgummiprofils angebrachten Spoiler umfasst. Auch aus der FR 2728219 ist ein Wischgummiprofil bekannt, welches durch Coextrusion erzeugt wird.

### Offenbarung der Erfindung

### Vorteile der Erfindung

Die Erfindung betrifft ein Verfahren zur Herstellung von Strangextrudaten gemäß dem Anspruch 1. Vorteil des erfindungsgemäßen Verfahrens ist es, dass durch die getrennte Herstellung des ersten Profils und des zweiten Profils zunächst ein Profil mit vergleichsweise einfachem Querschnitt aus dem Elastomermaterial hergestellt werden kann. Auf Grund des geringeren und einfacheren Querschnittes und damit der niedrigeren Masse ist der Schwerkrafteinfluss auf das erste Profil geringer. Es treten weniger Deformationen auf. Zudem sind hohe Extrusionsgeschwindigkeiten für das erste Profil auf Grund seiner einfachen Geometrie möglich. Um eine Deformation zu vermeiden oder die Deformation zu verringern ist es weiterhin möglich, das erste Profil so zu gestalten, dass dieses beispielsweise Auflageflächen aufweist, auf denen das Profil beim Transportieren und Vulkanisieren aufliegen kann.

Ein weiterer Vorteil des erfindungsgemäßen Verfahrens ist, dass das thermoplastische Material des zweiten Profils bereits beim Verlassen des Formwerkzeuges eine gute Formstabilität aufweist. Somit werden auch nach dem Aufbringen des zweiten Profils Verformungen vermieden.

In einer bevorzugten Ausführungsform weist das erste Profil mindestens zwei Auflageflächen, insbesondere vier Auflageflächen auf. Durch die vier Auflageflächen wird das erste Profil nur minimal deformiert. Insbesondere bei Einsatz des Verfahrens zur Herstellung von Wischgummis wird durch die vier Auflageflächen der Bereich des Lippenkopfes nicht oder nur minimal deformiert. Das erste Profil ist dabei als Doppelprofil ausgebildet, bei dem zwei Wischgummis im Bereich der Wischerlippe miteinander verbunden sind.

Um eine gute Haftung des zweiten Profils am ersten Profil zu erhalten, ist es bevorzugt, das zweite Profil aus dem thermoplastischen Material auf das erste Profil aus dem Elastomermaterial in Schritt (c) aufzuextrudieren, bevor das erste Profil ausgekühlt ist. Vorzugsweise wird das zweite Profil auf das erste Profil unmittelbar nach Abschluss der Vulkanisation aufextrudiert. Hierzu wird das erste Profil einem Extruder zugeführt und durch das Extruderwerkzeug geleitet, in dem das thermoplastische Material für das zweite Profil auf das erste Profil aufextrudiert wird. Zur besseren Haftvermittlung zwischen dem ersten und dem zweiten Profil kann die Oberfläche des ersten Profils unmittelbar vor dem Aufextrudieren des zweiten Profils durch eine Plasma-Beflammung aktiviert werden.

Das erste Profil aus dem Elastomermaterial kann aus einer oder aus mehreren Komponenten gefertigt sein. Wenn das erste Profil aus dem Elastomermaterial aus mehreren Komponenten gefertigt ist, so wird üblicherweise ein Coextrusionsverfahren eingesetzt. Durch die Verwendung unterschiedlicher Materialien lassen sich z.B. unterschiedliche Eigenschaften der einzelnen Bereiche des ersten Profils einstellen. So ist es z.B. dann, wenn das Profil ein Profil für ein Wischgummi ist, gewünscht, dass dieses im Bereich der Wischlippe, die auf einer Scheibe geführt wird, eine geringe Reibung aufweist. Andererseits ist im Bereich eines Kippsteges, mit dem der Lippenabschnitt mit einem Basisabschnitt verbunden ist, eine hohe Flexibilität und gute Wärmeformbeständigkeit gefordert. Das erste Profil ist ein Wischgummi und das zweite Profil ist üblicherweise ein Trägerprofil, das mit dem Wischgummi verbunden ist. Ein solches Trägerprofil ist im Allgemeinen ein Hohlprofil und weist in einer Ausführungsform mindestens einen Hohlraum auf, in den eine Federschiene einsetzbar ist. Durch Verwendung des thermoplastischen Materials, das eine größere Formstabilität aufweist als ein Elastomermaterial, aus dem das Trägerprofil gemäß dem Stand der Technik geformt wird, lassen sich breitere Federschienen realisieren.

Um zu vermeiden, dass das Wischgummi während der Fahrt von der Scheibe abhebt, weist das Trägerprofil in einer bevorzugten Ausführungsform eine Spoilerlippe auf. Die Spoilerlippe ist üblicherweise so geformt, dass das Wischgummi durch den Fahrtwind an die Windschutzscheibe angedrückt wird.

Im Allgemeinen ist das Trägerprofil während des Gebrauchs des Wischers keiner sehr hohen thermisch-mechanischen Beanspruchung ausgesetzt. Aus diesem Grund kann das thermoplastische Material das aus dem Stand der Technik bekannte, hochpreisige Elastomermaterial für das Trägerprofil ersetzen. Wenn das Trägerprofil eine Spoilerlippe aufweist, so ist es besonders bevorzugt, wenn die Spoilerspitze aus einem weichen Material gefertigt ist. Geeignete weiche Materialien für die Spoilerspitze sind z.B. Weich-Thermoplaste oder thermoplastische Elastomere.

Das Elastomermaterial, aus dem das erste Profil gefertigt wird, ist vorzugsweise ausgewählt aus der Gruppe bestehend aus Naturkautschuk (NR), Chloropren-Kautschuk (CR), Butadien-Kautschuk (BR), Styrol-Butadien-Kautschuk (SBR), Ethylen-Propylen-Copolymer (EPM), Ethylen-Propylen-Dien-Terpolymer (EPDM), Ethylen-Vinylacetat-Copolymere (EVM), Acrylnitril-Butadien-Kautschuk (NBR), hydrierter Acrylnitril-Butadien-Kautschuk (HNBR), Polyurethan-Elastomere (PUR), sowie Mischungen aus diesen Materialien.

Besonders bevorzugt ist das Elastomermaterial ausgewählt aus Ethylen-Propylen-Dien-Terpolymer, Naturkautschuk, Chloropren-Kautschuk oder einer Mischung daraus.

Das thermoplastische Material ist erfindungsgemäß ein Thermoplast oder ein thermoplastischer Elastomer. Als Thermoplast für das zweite Profil kann zunächst jeder beliebige, dem Fachmann bekannte Thermoplast verwendet werden. Geeignete Thermoplaste sind z.B. Polyolefine, beispielsweise Polypropylen oder Polyethylen, Polyamide, z.B. Polyamid 6, Polyamid 6.6 oder Polyamid 4.6, Polyvinylverbindungen, beispielsweise Polyvinylchlorid, Polyvinylidenchlorid, Polyvinylester, Polyvinylalkohole, Polyvinylacetale, Polyvinylether, Styrolpolymere, beispielsweise Polystyrol, Styrol-Acrylnitril-Copolymere, Acrylnitril-Butadien-Styrol-Copolymere, Polyacrylsäure, Poly(meth)acrylsäureester, Polyacrylate, Polymethylmethacrylat, Polyacrylamid, Polycarbonat, Polyoxymethylen, Polyphenylenether, Fluorpolymere, Polyaromaten, beispielsweise Polyphenylensulfid, Polyethersulfone, Polyetherketone, Polyimide, Polychinoxaline, Polychinoline, Polybenzimidazole, Polyester, Polyurethane, beispielsweise Polyisocyanate, Polyole wie Polyetherpolyole oder Polyesterpolyole.

Bevorzugte Thermoplaste sind Polyolefine, insbesondere Polyethylen oder Polypropylen, Polyamide und Polyacrylate.

Geeignete thermoplastische Elastomere sind z.B. thermoplastische Vulkanisate (TPV), z.B. Ethylen-Propylen-Dien-Terpolymer/Polypropylen-Blends (EPDM/PP), thermoplastische Polyolefine, z.B. Styrol-Ethylen-Butylen-Styrol-Copolymer (SEBS), oder thermoplastisches Polyurethan.

Ein weiterer Vorteil des Einsatzes eines thermoplastischen Materials für das zweite Profil ist, dass dieses nach dem Extrudieren nicht mehr vulkanisiert werden muss. Aus diesem Grund tritt keine weitere thermische Schädigung des ersten Profils auf.

Um die für ein Wischblatt eines Scheibenwischers erforderliche Federkraft zu erhalten, ist es bei Einsatz eines nicht hochtemperaturbeständigen Thermoplasten oder eines thermoplastischen Elastomeren notwendig, eine Federschiene, üblicherweise eine metallische Federschiene, einzusetzen. Um auf den Einsatz einer Federschiene verzichten zu können, ist daher das thermoplastische Material, aus dem das zweite Profil gefertigt ist, in einer besonders bevorzugten Ausführungsform ein hochtemperaturbeständiger Thermoplast. Geeignete Thermoplaste sind zum Beispiel aromatische Polyamide, Liquid Cristal Polymers (LCP) oder Polyphenylensulfid (PPS).

Der eingesetzte Thermoplast kann gefüllt oder ungefüllt sein. Wenn der Thermoplast gefüllt eingesetzt wird, so ist dieser zum Beispiel mit Glasfasern, Kohlenstofffasern oder Aramidfasern gefüllt. Es können sowohl Kurzfasern als auch Langfasern eingesetzt werden. Bevorzugt werden Glasfasern, ganz besonders bevorzugt lange Glasfasern, eingesetzt. Unter langen Glasfasern im Sinne der vorliegenden Erfindung sind Fasern mit einer Faserlänge im Bereich von 5 bis 20 zu verstehen.

Vorteil des Einsatzes eines hochtemperaturbeständigen Thermoplasten ist, dass die metallische Federschiene komplett entfallen kann. Dies ist insbesondere daher möglich, dass der hochtemperaturbeständige Thermoplast auch bei Sonneneinstrahlung nicht weich wird. Durch den Entfall der metallischen Federschiene kann das Gewicht des Scheibenwischers reduziert werden. Auch wird die Anzahl der verwendeten Teile reduziert. Zudem tritt keine Korrosion an metallischen Bauteilen auf. Hierdurch kann die Lebensdauer des Wischerblattes erhöht werden.

Um die für den Betrieb eines Scheibenwischers notwendige Federkraft zu erzielen, wird das Strangprofil vorzugsweise vor dem Abkühlen des Thermoplasten in eine gewünschte Form gebogen. Nach dem Biegen wird das Strangprofil abgekühlt und abschließend auf die geforderte Länge geschnitten.

Die Erfindung betrifft weiterhin ein mittels des erfindungsgemäßen Verfahrens hergestelltes Strangprofil, umfassend ein erstes Profil und ein mit dem ersten Profil verbundenes zweites Profil, wobei das erste Profil aus einem Elastomermaterial gefertigt ist. Das zweite Profil enthält ein thermoplastisches Material.

Als Elastomermaterial für das erste Profil eignen sich alle vorstehend beschriebenen Elastomermaterialien. Das thermoplastische Material für das zweite Profil ist ein Thermoplast oder ein thermoplastischer Elastomer. Geeignete Thermoplaste oder thermoplastische Elastomere sind ebenfalls vorstehend beschrieben.

In einer bevorzugten Ausführungsform ist das erste Profil ein Wischgummi und das zweite Profil ein mit dem Wischgummi verbundenes Trägerprofil. Ein solches Trägerprofil weist vorzugsweise mindestens einen Hohlraum auf. Durch den Hohlraum im Trägerprofil lassen sich gleichmäßige Wandstärken erzielen.

Hierdurch kann das zweite Profil gleichmäßig abkühlen. Auftretende Temperaturspannungen können auf diese Weise reduziert werden. Wenn in das Trägerprofil eine Federschiene eingesetzt werden soll, so kann zum Beispiel ein Hohlraum derart ausgebildet sein, dass die Federschiene in diesen einsetzbar ist. Insbesondere bei Einsatz eines hochtermperaturbeständigen Thermoplasten ist jedoch der Einsatz einer Federschiene nicht erforderlich. Zusätzlich kann das Trägerprofil mit einer Spoilerlippe versehen sein.

In einer bevorzugten Ausführungsform weist das erste Profil mindestens einen Hinterschnitt auf, über den das erste Profil mit dem zweiten Profil verbunden ist. Durch den Hinterschnitt im ersten Profil, in den das zweite Profil eingreift, wird eine stabile mechanische Verbindung von erstem Profil und zweitem Profil erzielt. Hierdurch lässt sich die Verbindung zwischen dem ersten Profil und dem zweiten Profil gegenüber einem auf das erste Profil ohne Hinterschnitt aufextrudiertes zweites Profil verbessern.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: eine Schnittdarstellung von zwei im Lippenabschnitt miteinander verbundenen Wischgummis,
- Figur 2: eine Schnittdarstellung von zwei im Lippenabschnitt miteinander verbundenen Wischgummis, die mit einem Trägerprofil verbunden sind,
- Figur 3: eine Schnittdarstellung von zwei am Lippenabschnitt miteinander verbundenen Wischgummis, die mit einem Trägerprofil mit Spoilerlippe verbunden sind,
- Figur 4: eine Schnittdarstellung von zwei am Lippenabschnitt miteinander verbundenen Wischgummis mit Hinterschnitt,
- Figur 5: eine Schnittdarstellung von zwei am Lippenabschnitt miteinander verbundenen Wischgummis mit Hinterschnitt, die mit einem Trägerprofil verbunden sind,
- Figur 6: eine Schnittdarstellung von zwei am Lippenabschnitt miteinander verbundenen Wischgummis mit Hinterschnitt, die mit einem Trägerprofil mit Spoilerlippe verbunden sind.
- Figur 7: eine Schnittdarstellung von zwei am Lippenabschnitt miteinander verbundenen Wischgummis mit Hinterschnitt, die mit einem Trägerprofil ohne Hohlraum verbunden sind,
- Figur 8: eine Schnittdarstellung von zwei am Lippenabschnitt miteinander verbundenen Wischgummis mit Hinterschnitt, die mit einem Trägerprofil ohne Hohlraum für eine Federschiene und mit Spoilerlippe verbunden sind.

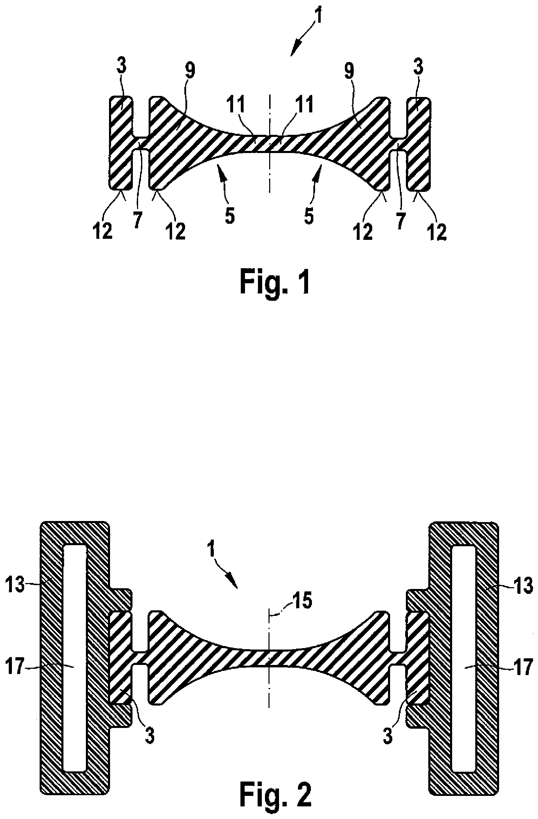

In Figur 1 ist eine Schnittansicht von zwei am Lippenabschnitt miteinander verbundenen Wischgummis dargestellt.

Ein erstes Profil 1 aus einem Elastomermaterial, das zur Herstellung von Wischgummis für Scheibenwischer verwendet wird, wird im Allgemeinen als so genanntes Tandem hergestellt. Hierbei sind zwei Wischgummis miteinander verbunden. Die Verbindung erfolgt dabei im Allgemeinen im Bereich der späteren Wischlippe der Wischgummis.

Ein Wischgummi umfasst im Allgemeinen einen Basisabschnitt 3 und eine Lippenabschnitt 5. Der Basisabschnitt 3 und der Lippenabschnitt 5 sind dabei üblicherweise über einen Kippsteg 7 miteinander verbunden.

Der Lippenabschnitt 5 umfasst im Allgemeinen einen Schwenkteil 9 und einen Lippenteil 11. Der Lippenteil 11 ist dabei am vorderen Abschnitt des Schwenkteils 9 ausgebildet. Bei der Herstellung des ersten Profils 1 sind die zwei Wischgummis am Lippenteil 11 miteinander verbunden. Um einzelne Wischgummis herzustellen, wird das erste Profil 1 im Bereich des Lippenteils 11 üblicherweise durch einen Messerschnitt getrennt. Bei dem erfindungsgemäß ausgebildeten Strangextrudat wird das erste Profil 1 jedoch erst nach dem Aufbringen des zweiten Profils, das in Figur 1 nicht dargestellt ist, getrennt.

Eine gute Funktion des Wischgummis kann erzielt werden, wenn an verschiedenen Stellen des ersten Profils 1 unterschiedliche Werkstoffe eingesetzt werden, mit denen jeweils die an die einzelnen Abschnitte gestellten Funktionen am besten erfüllt werden können. Die Herstellung der Wischgummis aus unterschiedlichen Materialien wird z.B. durch Coextrusion mit mehreren Materialien erzielt. So lassen sich z.B. der Basisabschnitt 3 und der Kippsteg 7 aus einem kostengünstigen und alterungsbeständigen Material herstellen, während der Lippenteil 11 bzw. der Lippenabschnitt 5 aus einem hochwertigeren Material, das einen geringen Reibungskoeffizienten auf Glas und eine hohe Verschleißfestigkeit aufweist, hergestellt wird. Es ist jedoch auch möglich, das gesamte erste Profil 1 aus nur einem Material herzustellen.

Geeignete Materialien für das erste Profil 1 sind z.B. Ethylen-Propylen-Dien-Terpolymer (EPDM), Naturkautschuk (NR), Chloropren-Kautschuk (CR) oder eine Mischung daraus.

Wenn der Lippenabschnitt 5 oder der Lippenteil 11 aus einem anderen Material gefertigt wird, so eignet sich z.B. eine Mischung aus Naturkautschuk und Polytetrafluorethylen. Auch ist es z.B. möglich, den Basisabschnitt 3 und den Kippsteg 7 aus EPDM und den Lippenteil 11 aus Naturkautschuk zu bilden.

Vorzugsweise weisen sowohl das Schwenkteil 9 als auch der Basisabschnitt 3 Auflageflächen 12 auf. Das Strangprofil 1 liegt beim Vulkanisieren auf den Auflageflächen 12 auf. Hierdurch wird eine Verformung des ersten Profils 1 beim Vulkanisieren verhindert oder stark reduziert.

Erfindungsgemäß wird das erste Profil 1 mit einem zweiten Profil 13 verbunden. Dies ist in Figur 2 dargestellt. Bei einem symmetrisch aufgebauten ersten Profil 1, das zur Herstellung von Wischgummis verwendet wird, werden zwei zweite Profile 13 mit dem ersten Profil 1 verbunden. Die zweiten Profile 13 weisen dabei üblicherweise die gleiche Form auf, sind jedoch zu einer Symmetrieachse 15 symmetrisch ausgebildet. Die Symmetrieachse 15 ist gleichzeitig die Schnittlinie, an der das erste Profil zur Herstellung einzelner Wischgummis getrennt wird.

In der hier dargestellten Ausführungsform zur Herstellung von Wischgummis wird das zweite Profil 13 mit dem Basisabschnitt 3 des ersten Profils 1 verbunden. Hierzu wird das zweite Profil 13 auf das erste Profil 1 aufextrudiert. Dies erfolgt üblicherweise dadurch, dass das erste Profil 1 durch ein Extrusionswerkzeug geführt wird während das zweite Profil 13 geformt wird. Um zu vermeiden, dass sich das erste Profil 1 deformiert während das zweite Profil 13 aufgebracht wird, wird das erste Profil 1 erfindungsgemäß vor dem Aufextrudieren des zweiten Profils 13 vulkanisiert. Durch das Vulkanisieren härtet das Polymermaterial des ersten Profils 1 aus und das erste Profil 1 wird formstabil. Die Vulkanisation kann dabei nach jedem beliebigen, dem Fachmann bekannten Verfahren erfolgen. Üblicherweise wird das erste Profil 1 in einem Heißluftofen oder einem Salzbad vulkanisiert.

Das zweite Profil 13, das auf das erste Profil 1 nach dessen Vulkanisation aufextrudiert wird, wird erfindungsgemäß aus einem thermoplastischen Material gefertigt. Hierzu eignen sich sowohl Thermoplaste als auch thermoplastische Elastomere. Die Verbindung des zweiten Profils 13 mit dem ersten Profil 1 erfolgt üblicherweise formschlüssig. Hierbei haftet das thermoplastische Material des zweiten Profils 13 am Elastomermaterial des ersten Profils 1. Eine gute Haftung ergibt sich insbesondere dann, wenn das zweite Profil 13 auf das erste Profil 1 aufextrudiert wird, bevor dieses nach der Vulkanisation abgekühlt ist.

Das thermoplastische Material für das zweite Profil 13 ist erfindungsgemäß ein Thermoplast oder ein thermoplastisches Elastomer. Als Thermoplaste eignen sich insbesondere Polyolefine, beispielsweise Polyethylen oder Polypropylen oder Polyamide. Bevorzugte thermoplastische Elastomere sind thermoplastische Vulkanisate wie eine Mischung aus Ethylen-Propylen-Dien-Terpolymer und Polypropylen (EPDM/PP), thermoplastische Polyolefine oder thermoplastische Polyurethane.

Wenn das durch das erfindungsgemäße Verfahren erzeugte Strangextrudat als Wischgummi eingesetzt wird, insbesondere als Wischgummi für Scheibenwischer von Kraftfahrzeugen, ist das zweite Profil 13 im Allgemeinen ein Trägerprofil. Dieses umfasst vorzugsweise einen Hohlraum 17. Im Hohlraum 17 kann eine Federschiene für ein Wischblatt eingelegt werden. Durch die Verwendung des thermoplastischen Materials für das zweite Profil 13 lässt sich der Hohlraum 17 größer gestalten als bei dem aus dem Stand der Technik bekannten Verfahren, bei dem das zweite Profil 13 aus dem gleichen Material gefertigt wird wie das erste Profil 1. Dies ist auf die bessere Formstabilität des thermoplastischen Materials, insbesondere auf die Formstabilität bereits beim Verlassen des Extruderwerkzeuges, zurückzuführen.

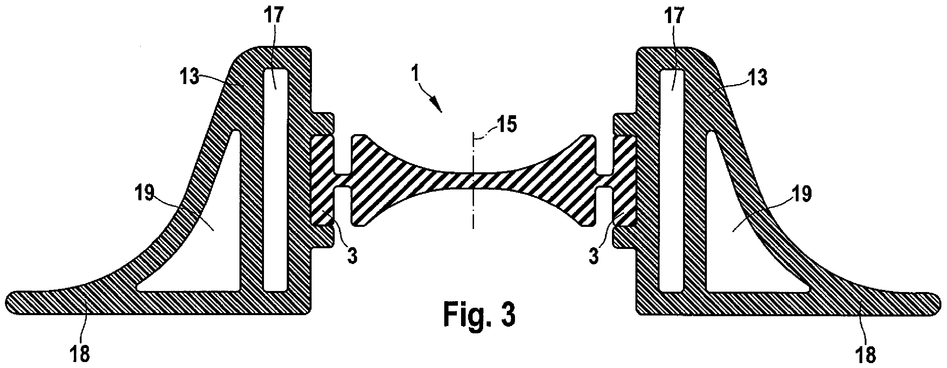

Eine alternative Ausführungsform ist in Figur 3 dargestellt.

Die in Figur 3 dargestellte Ausführungsform umfasst ebenfalls ein erstes Profil 1, das mit zweiten Profilen 13 verbunden ist. Im Unterschied zu der in Figur 2 dargestellten Ausführungsform umfassen die zweiten Profile 13 bei der in Figur 3 dargestellten Ausführungsform jeweils eine Spoilerlippe 18. Beim Betrieb des Scheibenwischers, für den das Wischgummi eingesetzt wird, dient die Spoilerlippe dazu, das Wischerblatt gegen die Windschutzscheibe anzupressen. Auch das in Figur 3 dargestellte zweite Profil 13 umfasst einen Hohlraum 17, in den eine hier nicht dargestellte Federschiene eingeschoben werden kann. Um eine gleichmäßige Wandstärke zu realisieren und damit ein gleichmäßiges Aushärten und Abkühlen umschließt die Spoilerlippe 18 einen zweiten Hohlraum 19.

Wenn das zweite Profil 13 aus einem Thermoplasten gefertigt ist, ist es bevorzugt, wenn die Spoilerlippe 18 aus einem weichen Material gefertigt ist. Geeignete Materialien sind z.B. ein Weich-Thermoplast, z.B. ein Weich-Polyolefin oder ein thermoplastisches Elastomer.

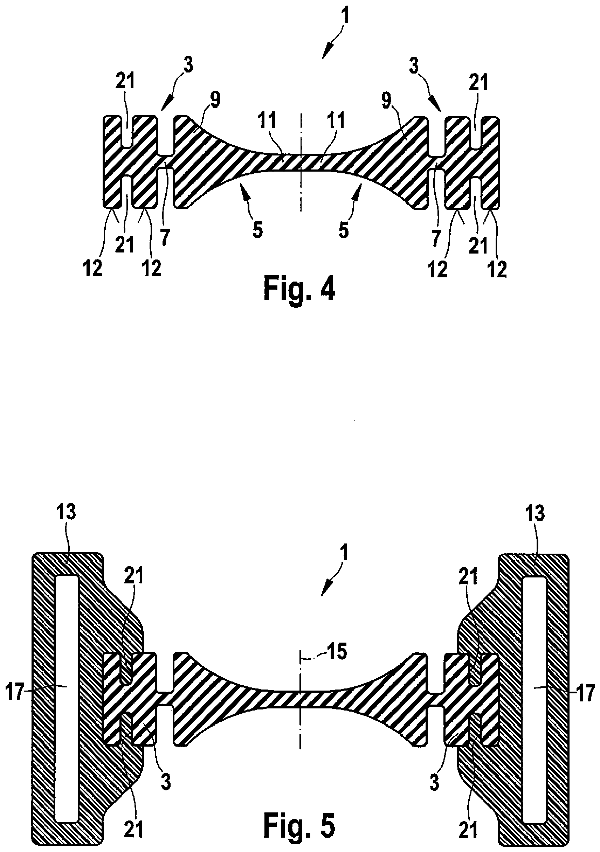

In Figur 4 ist eine alternative Ausführungsform für ein erstes Profil 1 dargestellt. Das in Figur 4 dargestellte erste Profil 1 unterscheidet sich von dem in Figur 1 dargestellten ersten Profil 1 dadurch, dass der Basisabschnitt 3 hinter dem Kippsteg 7 zwei sich gegenüberliegende Nuten 21 aufweist. Die Nuten 21 dienen als Hinterschnitt zur Verbindung des ersten Profils 1 mit dem zweiten Profil 13. Dies ist beispielhaft in Figur 5 dargestellt.

Bei der in Figur 4 dargestellten Ausführungsform ist es bevorzugt, dass der Basisabschnitt 3 jeweils zwei Auflageflächen 12 aufweist. Hierbei ist eine Auflagefläche 12 vor und eine Auflagefläche 12 hinter dem Hinterschnitt 21 ausgebildet. Durch die Auflageflächen 12 wird ebenso wie bei der in Figur 1 dargestellten Ausführungsform vermieden, dass sich das Strangprofil 1 während des Ausvulkanisierens verformt.

Bei der in Figur 5 dargestellten Ausführungsform ist das zweite Profil 13 ein Trägerprofil mit einem Hohlraum 17, in den eine Federschiene eingelegt werden kann. Beim Aufextrudieren des zweiten Profils 13 auf das erste Profil 1 dringt Material in die Nuten 21 ein. Neben der Haftung des thermoplastischen Materials des zweiten Profils 13 auf dem Elastomermaterial des ersten Profils 1 führt dies zu einer zusätzlichen stabilen Verbindung der Profile 1, 13. Ein Trennen der Profile 1 und 13 wird zusätzlich erschwert.

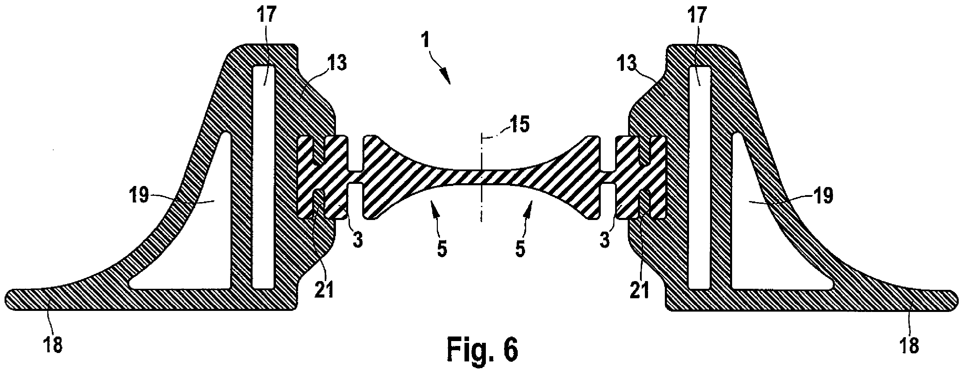

Die in Figur 6 dargestellte Ausführungsform unterscheidet sich von der in Figur 5 dargestellten Ausführungsform wiederum dadurch, dass das zweite Profil 13 Spoilerlippen 18 aufweist. Wie vorstehend bereits beschrieben, sind die Spoilerlippen 18 bei einem zweiten Profil 13 aus einem Thermoplasten, vorzugsweise aus einem weichen Material, beispielsweise einem Weich-Thermoplasten oder einem thermoplastischen Elastomer, gefertigt.

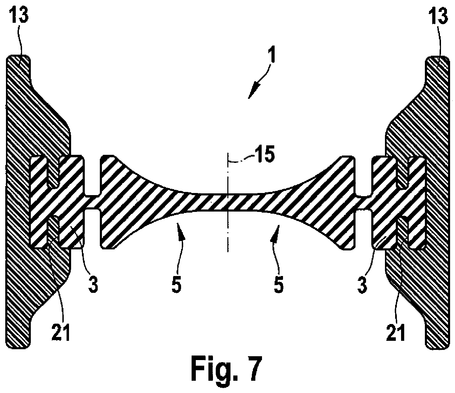

In Figur 7 ist eine Schnittdarstellung von zwei am Lippenabschnitt miteinander verbundenen Wischgummis mit Hinterschnitt, die mit einem Trägerprofil verbunden sind, das keinen Hohlraum aufweist, dargestellt.

Das in Figur 7 dargestellte Wischgummi entspricht im Wesentlichen den in Figur 5 dargestellten. Jedoch weist das zweite Profil 13 keinen Hohlraum auf. Das Wischgummi wird ohne Einsatz einer zusätzlichen Federschiene verwendet. Um die notwendige Federkraft, die für einen Betrieb des Wischgummis erforderlich ist, zu erzielen, ist das zweite Profil 13 aus einem hochtemperaturbeständigen Thermoplasten gefertigt. Wenn das Strangprofil, wie hier dargestellt, ein Doppelprofil aus zwei am Lippenabschnitt 5 miteinander verbundenen Wischgummis ist, wird das Strangprofil nach dem Aufextrudieren des zweiten Profils 13 in zwei Einzelprofile geschnitten. Anschließend werden die Einzelprofile vorzugsweise gebogen. Ein geeigneter Radius, auf den das Strangprofil gebogen wird, liegt zum Beispiel im Bereich von 3000 bis 5000 mm. Nach dem Biegen bildet die an der Symmetrieachse 15 entstehende Wischkante den Außenradius.

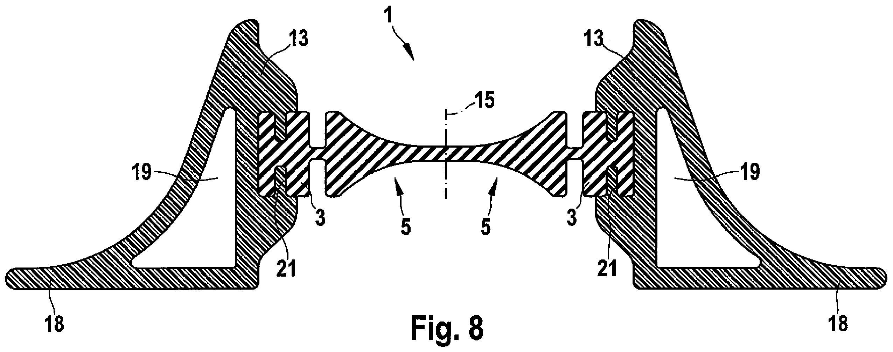

Die in Figur 8 dargestellte Ausführungsform entspricht im Wesentlichen der in Figur 6 dargestellten Ausführungsform, unterscheidet sich von dieser jedoch dadurch, dass das zweite Profil 13 keinen Hohlraum 17 zur Aufnahme einer Federschiene enthält. Wie bei der in Figur 7 dargestellten Ausführungsform ist das zweite Profil 13 in diesem Fall vorzugsweise aus einem hochtemperaturbeständigen Thermoplasten gefertigt. Durch die Verwendung des hochtemperaturbeständigen Thermoplasten kann auf die Federschiene verzichtet werden. Auch das in Figur 8 dargestellte Strangprofil wird nach dem Aufextrudieren des zweiten Profils 13 an der Symmetrieachse 15 geschnitten und anschließend gebogen, um die für den Wischvorgang erforderliche Federkraft zu erzeugen. Nach dem Schneiden und Biegen werden die so erzeugten Profile auf die erforderliche Länge geschnitten und abgekühlt.

Neben den hier dargestellten Ausführungsformen, bei denen das erste Profil 1 eine Wischlippe für ein Wischgummi eines Scheibenwischers und das zweite Profil 13 ein Trägerprofil ist, lässt sich durch das erfindungsgemäße Verfahren auch jedes beliebige andere Profil herstellen, bei dem ein erstes Profil aus einem Elastomermaterial mit einem zweiten Profil aus einem thermoplastischen Material verbunden wird.

## Patentansprüche

1. Verfahren zur Herstellung von Strangextrudaten für Wischblätter eines Scheibenwischers, umfassend ein erstes Profil (1) aus einem Elastomermaterial sowie ein zweites, mit dem ersten Profil (1) verbundenes Profil (13), **gekennzeichnet durch** die folgenden Schritte:
a) Extrusion des ersten Profils aus dem Elastomermaterial in Form eines Wischgummis,
b) Ausvulkanisieren des ersten Profils (1) aus dem Elastomermaterial und
c) Aufextrudieren eines zweiten Profils (13) als Trägerprofil aus einem thermoplastischen Material auf das erste Profil (1) aus dem Elastomermaterial, wobei das erste Profil (1) einen Basisabschnitt (3), einen Lippenabschnitt (5) und einen diese verbindenden Kippsteg (7) umfasst.

2. Verfahren gemäß Anspruch 1, **dadurch gekennzeichnet, dass** das zweite Profil (13) aus dem thermoplastischen Material auf das erste Profil (1) aus dem Elastomermaterial in Schritt (c) aufextrudiert wird, bevor das erste Profil ausgekühlt ist.

3. Verfahren gemäß Anspruch 1 oder 2, **dadurch gekennzeichnet, dass** das erste Profil (1) aus dem Elastomermaterial ein Wischgummi und das zweite Profil (13) aus dem thermoplastischen Material ein Trägerprofil ist, das mit dem Wischgummi verbunden ist.

4. Verfahren gemäß einem der Ansprüche 1 bis 3, **dadurch gekennzeichnet, dass** das Elastomermaterial ausgewählt ist aus der Gruppe bestehend aus Naturkautschuk, Chloropren-Kautschuk, Butadien-Kautschuk, Styrol-Butadien-Kautschuk, Ethylen-Propylen-Copolymere, Ethylen-Propylen-Dien-Terpolymere, Ethylen-Vinylacetat-Copolymere, Acrylnitril-Butadien-Kautschuk, hydrierter Acrylnitril-Butadien-Kautschuk, Polyurethan-Elastomere, sowie Mischungen aus diesen Materialien.

5. Verfahren gemäß einem der Ansprüche 1 bis 4, **dadurch gekennzeichnet, dass** das Elastomermaterial Ethylen-Propylen-Dien-Terpolymer, Naturkautschuk, Chloropren-Kautschuk oder eine Mischung daraus ist.

6. Verfahren gemäß einem der Ansprüche 1 bis 5, **dadurch gekennzeichnet, dass** das thermoplastische Material, aus dem das zweite Profil (13) gefertigt ist, ein Thermoplast oder ein thermoplastischer Elastomer ist.

7. Verfahren gemäß Anspruch 6, **dadurch gekennzeichnet, dass** der Thermoplast ausgewählt ist aus der Gruppe bestehend aus Polyolefin, Polyamid und Polyacrylate.

8. Verfahren gemäß Anspruch 6, **dadurch gekennzeichnet, dass** der thermoplastische Elastomer ausgewählt ist aus der Gruppe bestehend aus thermoplastischen Vulkanisaten, thermoplastischem Polyurethan und thermoplastischem Polyolefin.

9. Verfahren gemäß einem der vorhergehenden Ansprüche, **dadurch gekennzeichnet, dass** das Trägerprofil eine Spoilerlippe (18) aufweist.

10. Verfahren gemäß einem der vorhergehenden Ansprüche, **dadurch gekennzeichnet, dass** das Trägerprofil ein Hohlprofil ist.

11. Verfahren nach Anspruch 1, **dadurch gekennzeichnet, dass** das erste Profil (1) mindestens einen Hinterschnitt (21) aufweist, über den das erste Profil (1) mit dem zweiten Profil (13) verbunden wird.

12. Verfahren gemäß Anspruch 1, **dadurch gekennzeichnet, dass** das thermoplastische Material, das das zweite Profil enthält, ein hochtemperaturbeständiger Thermoplast, insbesondere ein aromatisches Polyamid, ein Liquid Cristal Polymer (LCP) oder ein Polyphenylensulfid (PPS) ist.

## Claims

1. Process for producing extrudates for wiper blades of a windscreen wiper, comprising a first profile (1) composed of an elastomer material and a second profile (13) joined to the first profile (1), **characterized by** the following steps:
a) extrusion of the first profile composed of the elastomer material in the form of a wiping rubber,
b) vulcanization of the first profile (1) composed of the elastomer material and
c) extrusion of a second profile (13) as support profile composed of a thermoplastic material onto the first profile (1) composed of the elastomer material, wherein the first profile (1) comprises a base section (3), a lip section (5) and a tilting bar (7) joining them.

2. Process according to Claim 1, **characterized in that** the second profile (13) composed of the thermoplastic material is extruded onto the first profile (1) composed of the elastomer material in step (c) before the first profile has cooled completely.

3. Process according to Claim 1 or 2, **characterized in that** the first profile (1) composed of the elastomer material is a wiping rubber and the second profile (13) composed of the thermoplastic material is a support profile joined to the wiping rubber.

4. Process according to any of Claims 1 to 3, **characterized in that** the elastomer material is selected from the group consisting of natural rubber, chloroprene rubber, butadiene rubber, styrene-butadiene rubber, ethylene-propylene copolymers, ethylene-propylene-diene terpolymers, ethylene-vinyl acetate copolymers, acrylonitrile-butadiene rubber, hydrogenated acrylonitrile-butadiene rubber, polyurethane elastomers and mixtures of these materials.

5. Process according to any of Claims 1 to 4, **characterized in that** the elastomer material is ethylene-propylene-diene terpolymer, natural rubber, chloroprene rubber or a mixture thereof.

6. Process according to any of Claims 1 to 5, **characterized in that** the thermoplastic material of which the second profile (13) is made is a thermoplastic or a thermoplastic elastomer.

7. Process according to Claim 6, **characterized in that** the thermoplastic is selected from the group consisting of polyolefin, polyamide and polyacrylates.

8. Process according to Claim 6, **characterized in that** the thermoplastic elastomer is selected from the group consisting of thermoplastic vulcanizates, thermoplastic polyurethane and thermoplastic polyolefin.

9. Process according to any of the preceding claims, **characterized in that** the support profile has a spoiler lip (18).

10. Process according to any of the preceding claims, **characterized in that** the support profile is a hollow profile.

11. Process according to Claim 1, **characterized in that** the first profile (1) has at least one undercut (21) via which the first profile (1) is joined to the second profile (13).

12. Process according to Claim 1, **characterized in that** the thermoplastic material present in the second profile is a high-temperature-resistant thermoplastic, in particular an aromatic polyamide, a liquid crystal polymer (LCP) or a polyphenylene sulfide (PPS).

## Revendications

1. Procédé de fabrication d'extrudats pour des raclettes d'un essuie-glace, comprenant un premier profilé (1) en un matériau élastomère et un deuxième profilé (13), relié avec le premier profilé (1), **caractérisé par** les étapes suivantes :
a) l'extrusion du premier profilé à partir du matériau élastomère sous la forme d'une lame d'essuie-glace,
b) la vulcanisation du premier profilé (1) en le matériau élastomère, et
c) l'extrusion d'un deuxième profilé (13) en tant que profilé support à partir d'un matériau thermoplastique sur le premier profilé (1) en le matériau élastomère, le premier profilé (1) comprenant une section de base (3), une section de lèvre (5) et une barrette de basculement (7) les reliant.

2. Procédé selon la revendication 1, **caractérisé en ce que** le deuxième profilé (13) en le matériau thermoplastique sur le premier profilé (1) en le matériau élastomère est extrudé à l'étape (c) avant le refroidissement du premier profilé.

3. Procédé selon la revendication 1 ou 2, **caractérisé en ce que** le premier profilé (1) en le matériau élastomère est une lame d'essuie-glace, et le deuxième profilé (13) en le matériau thermoplastique est un profilé support qui est relié avec la lame d'essuie-glace.

4. Procédé selon l'une quelconque des revendications 1 à 3, **caractérisé en ce que** le matériau élastomère est choisi dans le groupe constitué par le caoutchouc naturel, le caoutchouc de chloroprène, le caoutchouc de butadiène, le caoutchouc de styrène-butadiène, les copolymères d'éthylène-propylène, les terpolymères d'éthylène-propylène-diène, les copolymères d'éthylène-acétate de vinyle, le caoutchouc d'acrylonitrile-butadiène, le caoutchouc d'acrylonitrile-butadiène hydrogéné, les élastomères de polyuréthane, ainsi que les mélanges de ces matériaux.

5. Procédé selon l'une quelconque des revendications 1 à 4, **caractérisé en ce que** le matériau élastomère est un terpolymère d'éthylène-propylène-diène, le caoutchouc naturel, le caoutchouc de chloroprène ou un mélange de ceux-ci.

6. Procédé selon l'une quelconque des revendications 1 à 5, **caractérisé en ce que** le matériau thermoplastique dont le deuxième profilé (13) est constitué est un thermoplastique ou un élastomère thermoplastique.

7. Procédé selon la revendication 6, **caractérisé en ce que** le thermoplastique est choisi dans le groupe constitué par les polyoléfines, les polyamides et les polyacrylates.

8. Procédé selon la revendication 6, **caractérisé en ce que** l'élastomère thermoplastique est choisi dans le groupe constitué par les vulcanisats thermoplastiques, les polyuréthanes thermoplastiques et les polyoléfines thermoplastiques.

9. Procédé selon l'une quelconque des revendications précédentes, **caractérisé en ce que** le profilé support comprend une lèvre de spoiler (18).

10. Procédé selon l'une quelconque des revendications précédentes, **caractérisé en ce que** le profilé support est un profilé creux.

11. Procédé selon la revendication 1, **caractérisé en ce que** le premier profilé (1) comprend au moins une contre-dépouille (21), par laquelle le premier profilé (1) est relié avec le deuxième profilé (13).

12. Procédé selon la revendication 1, **caractérisé en ce que** le matériau thermoplastique que le deuxième profilé contient est un thermoplastique résistant aux températures élevées, notamment un polyamide aromatique, un polymère cristallin liquide (LCP) ou un polysulfure de phénylène (PPS).
